# EUROPÄISCHE PATENTSCHRIFT

(11) **EP 1 562 794 B1**
(45) Veröffentlichungstag und Bekanntmachung des Hinweises auf die Patenterteilung: **03.05.2006**
(21) Anmeldenummer: 03776802.5
(22) Anmeldetag: 20.10.2003
(51) Int. Cl.: B60R 21/01

(54) **SYSTEM UND VERFAHREN ZUM ERKENNEN DER SITZBELEGUNG IN EINEM FAHRZEUG**
SYSTEM AND METHOD FOR DETECTING SEAT OCCUPANCY IN A VEHICLE
SYSTEME ET PROCEDE POUR RECONNAITRE L'OCCUPATION D'UN SIEGE DE VEHICULE

(30) Priorität: 20.11.2002 DE 10254200
(43) Veröffentlichungstag der Anmeldung: 17.08.2005
(73) Patentinhaber: SIEMENS AKTIENGESELLSCHAFT, 80333 München (DE)
(72) Erfinder: HOFBECK, Klaus, 92318 Neumarkt (DE); RÖSEL, Birgit, 93055 Regensburg (DE)
(86) Internationale Anmeldenummer: PCT/DE2003/003468
(87) Internationale Veröffentlichungsnummer: WO 2004/045915

(56) Entgegenhaltungen:
- DE-A- 19 839 696
- US-A1- 2002 140 215
- US-B1- 6 199 904
- US-B1- 6 462 701
- "Entwicklung eines Mikrochips zur Realisierung von Identifikationssystemen" FH AALEN EDA-ZENTRUM, [Online] XP002272961 Gefunden im Internet: <URL:http://www.eda.fh-aalen.de/Projekte/i dentsys/Dokumente/rfid.pdf/> [gefunden am 2004-03-10]
- WILLIAMSON F R ET AL: "A CODED RADAR REFLECTOR FOR REMOTE IDENTIFICATION OF PERSONNEL AND VEHICLES" PROCEEDINGS OF THE NATIONAL RADAR CONFERENCE. LYNNFIELD, APR. 20 - 22, 1993, NEW YORK, IEEE, US, 20. April 1993 (1993-04-20), Seiten 186-191, XP002065550

## Beschreibung

Die Erfindung betrifft ein System zum Erkennen der Sitzbelegung in einem Fahrzeug, mit den Merkmalen des Oberbegriffs des Anspruchs 1.

Die Erfindung betrifft weiterhin ein Verfahren zum Erkennen der Sitzbelegung in einem Fahrzeug, mit dem Merkmalen des Oberbegriffs des Anspruchs 14.

Derartige Systeme und Verfahren sind bekannt. Sie dienen insbesondere dazu, das Auslöseverhalten eines Airbags in Abhängigkeit der Sitzbelegung zu beeinflussen.

Ein Beispiel für ein derartiges System und Verfahren ist aus der US 6,199,904 B1 bekannt. Dabei werden Mikrowellen von einem Mikrowellensender auf eine reflektierende Struktur in einem Fahrzeugsitz gesendet. Die reflektierten Mikrowellen werden von einem Mikrowellenempfänger nachgewiesen. Da die Intensität der reflektierten Mikrowellen davon abhängt, ob die Mikrowellenstrahlung durch eine Person, die den Sitz belegt, abgeschwächt wird, kann aus dem Auswertungsergebnis auf die Sitzbelegung geschlossen werden. Nachteilig an dem System und dem Verfahren ist jedoch, dass der Airbagsteuerung nicht immer zuverlässige Auswertungen zugrunde gelegt werden. Beispielsweise kann es möglich sein, dass eine Reflexion an anderen Objekten erfolgt als an den dafür vorgesehenen Reflexionsobjekten in dem Sitz. Es würde somit vorgetäuscht, dass der Sitz nicht belegt ist, was ein Sperren des Airbags zur Folge haben könnte. Dies kann lebensgefährliche Konsequenzen für die Insassen des Fahrzeugs haben. Weiterhin sind die im Rahmen der Ausführung erforderlichen Kalibrierungen sehr aufwendig, was die Kosten des Systems in die Höhe treibt. Ferner sind alle zusätzlichen Auswertungen mit Rechenzeit verbunden, was einer dynamischen Messung, das heißt einer Messung erst im Falle eines Aufpralls des Fahrzeugs, entgegenstünde. Ebenfalls werden in der US 6,199,904 B1 keine besonderen Vorkehrungen getroffen, um einen Out-of-Position-Fall zu erkennen, das heißt beispielsweise ein Vorbeugen der Person. Das Erkennen eines solchen Out-of-Position-Falls wäre wünschenswert, da in solchen Situationen das Zünden eines Airbags möglicherweise unterbunden werden sollte.

Das "Erkennen der Sitzbelegung" umfasst das Erkennen, ob ein Sitz belegt ist, das Erkennen, in welcher Position sich eine Person auf dem Sitz befindet und/oder das Erkennen, welche Statur die Person auf dem Sitz hat. Die US-B1-6 462 701 zeigt die Merkmale des Oberbegriffs der unabhängigen Ansprüche 1 und 14.

Der Erfindung liegt die Aufgabe zugrunde, ein System und ein Verfahren zur Verfügung zu stellen, die die Nachteile des Standes der Technik überwinden und die insbesondere ein zuverlässiges Erkennen der Sitzposition und dabei auch des Out-of-Position-Falls ermöglichen.

Diese Aufgabe wird mit den Merkmalen der unabhängigen Ansprüche gelöst.

Vorteilhafte Ausführungsformen der vorliegenden Erfindung sind in den abhängigen Ansprüchen angegeben.

Die Erfindung baut auf dem gattungsgemäßen System dadurch auf, dass die Reflektoren modulierende Bachscatter Vorrichtungen sind und dass Backscatter-Vorrichtungen über ein durch die Modulation aufgeprägtes Muster voneimander unterscheidbar sind. Indem mehrere Elemente vorgesehen werden, können diese in Abhängigkeit der Sitzbelegung mehr oder weniger abgedeckt beziehungsweise freigegeben werden. Sitzt eine Person ordnungsgemäß in dem Sitz, so wird sie eine größere Anzahl von Elementen abdecken als in dem Fall, wenn sie sich aus der ordnungsgemäßen Sitzposition herausbewegt. Ebenso kann zwischen Personen mit unterschiedlichen Körpervolumina unterschieden werden, da kleine Personen eine geringere Anzahl von Elementen abdecken als Personen mit größerem Körpervolumen. Grundsätzlich können im Fahrzeugsitz Reflektoren oder Empfänger angeordnet sein, um das erfindungsgemäße System zu realisieren. Daher werden diese unterschiedlichen technischen Möglichkeiten unter dem allgemeinen Begriff Mittel oder Elemente zum "Reflektieren beziehungsweise Empfangen" zusammengefasst.

Insbesondere ist es nützlich, dass mehrere Elemente zum Reflektieren beziehungsweise Empfangen untereinander in einer Lehne des Fahrzeugsitzes und/oder einer Kopfstütze angeordnet sind. Befindet sich der Mikrowellensender beispielsweise im vorderen Bereich des PKW im Dachhimmel, so werden bei ordnungsgemäß sitzender Person eine maximale Anzahl von Elementen abgedeckt. Neigt sich die Person nach vorn, so werden die untereinander angeordneten Elemente sukzessive freigegeben, so dass die empfangene Intensität eine stufenförmige Steigerung erfährt. Schaltschwellen, ab denen ein Airbag nicht mehr gezündet werden soll, können somit beispielsweise in eine Flanke des stufenförmigen Verlaufs gelegt werden, so dass die Schaltschwellen präzise einer bestimmten Neigung der Person auf dem Fahrzeugsitz entsprechen.

Die Modulation der Mikrowellenstrahlung durch die Backscatter-Vorrichtungen bewirkt, dass der Reflektor ohne weiteres von anderen metallisch leitfähigen Gegenständen unterschieden werden kann. Findet also beispielsweise eine Reflexion der Mikrowellenstrahlung am Gehäuse eines Laptops statt, mit dem der Beifahrer in einem PKW arbeitet, so führt dies nicht dazu, dass das System von einem unbelegten Sitz ausgeht. Ein Airbag würde daher im Falle eines Aufpralls dennoch zünden. Die Begriffe "Reflektor, reflektieren, etc." werden im Rahmen der vorliegenden Offenbarung mit sehr allgemeiner Bedeutung benutzt. Es sind nicht nur Reflexionen im klassischen Sinne gemeint, sondern auch beispielsweise das Zurücksenden von elektromagnetischer Strahlung mittel eines modulierenden Backscatter-Prozesses.

Es ist vorgesehen, dass die Backscatter-Vorrichtungen modulierende Backscatter-Vorrichtungen sind. Über das durch Modulation aufgeprägte Muster kann die Reflexion eindeutig einer Backscatter-Vorrichtung zugeordnet werden.

Das erfindungsgemäße System kann in der Weise weitergebildet sein, dass die Backscatter-Vorrichtungen als passive, semipassive, semiaktive oder aktive Backscatter-Vorrichtungen realisiert sind. Passive Backscatter-Vorrichtungen sind besonders einfach aufgebaut, sie benötigen keine zusätzliche Energieversorgung, und sie stellen insofern eine besonders kostengünstige Lösung zur Verfügung. Semipassive Backscatter-Vorrichtungen werden mit einem zusätzlichen Verstärker betrieben, der eine geringfügige elektrische Leistung aufnimmt. Sie haben gegenüber passiven Backscatter-Vorrichtungen den Vorteil, dass mit höherer Intensität reflektiert werden kann. Auf dieser Grundlage kann zuverlässiger ausgewertet werden. Eine besonders zuverlässige Auswertung würde eine aktive Backscatter-Vorrichtung bewirken, das heißt eine Backscatter-Vorrichtung mit aktiven elektronischen Bauelementen. Hierdurch kann aufgrund erhöhter Mikrowellenintensitäten eine besonders zuverlässige Auswertung ermöglicht werden. Allerdings ist die Belastung der Fahrzeuginsassen aufgrund der Mikrowellenstrahlung bei dieser Ausführungsform der vorliegenden Erfindung höher als bei passiven Backscatter-Vorrichtungen.

Weiterhin kann das System in besonders nützlicher Weise dadurch weitergebildet sein, dass die Sitzbelegung auf der Grundlage der Beugung der Mikrowellen die empfangene Intensität beeinflusst und dass die empfangene Intensität Informationen über die Sitzbelegung liefert. Da Mikrowellenstrahlung, im Gegensatz zu beispielsweise Infrarotstrahlung, aufgrund ihrer Wellenlänge ausgeprägte Beugungserscheinungen an einem in dem Strahlungsweg angeordneten Objekt zeigen kann, ist es möglich, die Intensitätsänderungen aufgrund von Beugungseffekten zu nutzen. Eine leerer Sitz lässt sich somit von einem mit einem Erwachsenen besetzten Sitz und beispielsweise auch von einem mit Kind und Kindersitz besetzten Sitz unterscheiden, da im letzten Fall aufgrund der Erhöhung durch den Kindersitz auch eine Beugung von Mikrowellenstrahlung zu in der Sitzfläche angeordneten Elementen erfolgen kann.

Nützlicherweise kann vorgesehen sein, dass die von der Mikrowellenstrahlung zurückgelegte Wegstrecke zwischen Mikrowellensender und Mikrowellenempfänger beziehungsweise den Mitteln zum Reflektieren beziehungsweise Empfangen durch Laufzeitmessung ermittelbar ist. Hierdurch ist es möglich, die Einstellung des Sitzes zu ermitteln. Auf diese Weise liegen weitere Informationen für eine Airbagsteuerung vor.

In besonders vorteilhafter Weise kann vorgesehen sein, dass die Position eines Sitzes ermittelbar ist und dass aus dem Ergebnis des Ermittelns der Wegstrecke und dem Ergebnis des Ermittelns der Position des Sitzes ermittelt werden kann, ob die empfangene Strahlung von dem Mikrowellensender ausgesendet wurde. Derartige Plausibilitätserwägungen sind im Falle der Verwendung einer Backscatter-Vorrichtung als Reflektor grundsätzlich entbehrlich, können gleichwohl aber im Sinne einer Redundanz zum Einsatz kommen. Besonders nützlich sind die Erwägungen aufgrund der Laufzeit der Mikrowellensignale aber, wenn der reflektierten Mikrowellenstrahlung kein Muster, beispielsweise durch einen Backscatter-Prozess, aufgeprägt wird. Dann kann durch zusätzliche Auswertung der Position des Sitzes festgestellt werden, ob die Reflexion an einem Reflektor beispielsweise in der Sitzlehne stammen kann oder ob die Reflexion beispielsweise von einem Laptop auf dem Schoß eines Beifahrers herrührt.

Es ist vorteilhaft, dass der mindestens eine Mikrowellensender und der mindestens eine Mikrowellenempfänger als mindestens eine Mikrowellensende- und -empfangsvorrichtung mit einer Sende- und Empfangsantenne realisiert sind. Die Mikrowellenstrahlung gelangt somit von der Mikrowellensende- und -empfangsvorrichtung zu den Reflektoren und von den Reflektoren zurück zu der Mikrowellensende- und -empfangsvorrichtung. Die Mikrowellensende- und -empfangsvorrichtung kann sich beispielsweise im Armaturenbrett des Fahrzeugs oder im Dachhimmel befinden. Bei einer solchen Anordnung der Mikrowellensende- und -empfangsvorrichtung können die bereits beschriebenen Positionsänderungen von Personen zuverlässig erfasst werden. Ebenfalls können die besprochenen Unterscheidungen zwischen Personen mit unterschiedlichen Körpervolumina erfolgen. Es ist aber auch möglich, dass beispielsweise auf dem Beifahrersitz ein Kindersitz sicher transportiert werden kann. Der Großteil der Mikrowellenstrahlung wird ungehindert zu den Reflektoren gelangen und von diesen zurück zum Empfänger, so dass das Auslösen eines Airbags verhindert werden kann, da der Kindersitz im Allgemeinen aus Kunststoff besteht und das Kind prinzipbedingt anhebt. Als zusätzliche Sicherheitsmaßnahme ist möglich, einen weiteren Reflektor an dem Kindersitz anzubringen. Auf diese Weise wird auch Mikrowellenstrahlung reflektiert, die ansonsten im Kindersitz beziehungsweise in dem im Kindersitz sitzenden Kind absorbiert worden wäre. Ein Auslösen der Airbags kann somit noch zuverlässiger verhindert werden. Verwendet man modulierende Backscatter-Vorrichtungen als Reflektoren, so können die Backscatter-Vorrichtungen in der Sitzlehne beziehungsweise auf dem Kindersitz die Signale in unterschiedlicher Weise modulieren, so dass in eindeutiger Weise erkannt werden kann, dass sich ein Kindersitz auf dem Sitz befindet.

Es ist besonders nützlich, dass eine Steuereinheit vorgesehen ist, die in Abhängigkeit der empfangenen Strahlung Funktionen im Fahrzeug triggert, sperrt oder freigibt. Die Sitzbelegungserkennung kann auch im Zusammenhang mit anderen Funktionen im Fahrzeug sinnvoll sein, die Freigabe beziehungsweise Sperrung eines Airbags ist jedoch eine besonders wichtige Errungenschaft der vorliegenden Erfindung.

Diese kann beispielsweise auch so ausgebildet sein, dass der mindestens eine Mikrowellensender und/oder der mindestens eine Mikrowellenempfänger Bestandteil eines in dem Fahrzeug installierten Zugangskontroll- und Startsystems sind. Bei Mikrowellenbasierten Zugangskontroll- und Startsystemen befindet sich die Antenne zur Abdeckung des Innenraums im Allgemeinen in einer solchen Position, dass sie auch in den Fahrzeugsitzen angeordnete Elemente zum Reflektieren beziehungsweise Empfangen ansprechen kann. Folglich kann durch die Ausführungsform der vorliegenden Erfindung, bei der Komponenten des Zugangskontroll- und Startsystems für die Sitzbelegungserkennung verwendet werden, eine integrierende und somit kostenreduzierende Maßnahme zur Verfügung gestellt werden.

Aus vergleichbaren Gründen kann es vorteilhaft sein, dass die Auswertung der von dem Mikrowellenempfänger empfangenen Signale durch Mittel unterstützt beziehungsweise durchgeführt wird, die im Rahmen eines in dem Fahrzeug installierten Zugangskontroll- und Startsystems eingesetzt werden.

Das System kann so ausgebildet sein, dass der Strahlungsweg geradlinig verläuft. Wenn im vorliegenden Zusammenhang von einem geradlinigen Strahlungsweg die Rede ist, ist dies auf die Ausbreitung der Strahlung ohne Beugungserscheinungen bezogen. Die vorliegenden Ausführungen beziehen sich somit auf die geometrische Anordnung der Komponenten. Es besteht also eine direkte Sichtverbindung zwischen dem Sender, den Mitteln zum Reflektieren beziehungsweise Empfangen und/oder dem Empfänger. Auf diese Weise wird ein besonders einfaches System zur Verfügung gestellt.

Es kann aber auch nützlich sein, dass der Strahlungsweg auf Umwegen verläuft. Die Mikrowellenstrahlung kann mittels leitfähiger, im Fahrzeug verbauter Materialien durch das Fahrzeug gelenkt werden, so dass eine gezielte Ausleuchtung bestimmter Zonen erfolgen kann, ohne dass zusätzliche Mikrowellensende-und -empfangsvorrichtungen erforderlich wären.

In einer weiteren besonders bevorzugten Ausführungsform der vorliegenden Erfindung ist vorgesehen, dass die mehreren Elemente zum Reflektieren beziehungsweise Empfangen während bestimmter Zeitintervalle selektiv aktiviert beziehungsweise deaktiviert werden können und dass über die Zuordnung der Elemente zu den Zeitintervallen die Elemente voneinander unterscheidbar sind. Die Elemente zum Reflektieren beziehungsweise Empfangen werden somit seriell angesteuert, so dass jedem Element eindeutig Zeitschlitze zugeordnet werden. Dies kann bei Backscatter-Vorrichtungen beispielsweise dadurch erfolgen, dass sie in den zugeordneten Zeitschlitzen mit Strom versorgt werden und somit in diesen Zeitschlitzen die Hochfrequenzfelder moduliert reflektieren können.

In diesem Zusammenhang ist es besonders nützlich, dass die Backscatter-Vorrichtungen mit derselben Frequenz modulierbar sind. Auf diese Weise ist es möglich, die Sende- und Empfangseinrichtungen besonders einfach aufzubauen, wobei dennoch aufgrund der Verwendung von modulierter reflektierter Strahlung die vollständige Systemfunktionalität aufrechterhalten wird.

Es ist aber auch möglich, dass die Backscatter-Vorrichtungen mit unterschiedlichen Frequenzen modulierbar sind. Auf diese Weise kann allein auf der Grundlage der Modulationsfrequenz zwischen den einzelnen Reflektoren unterschieden werden. Aber auch in dem Fall, dass den verschiedenen Elementen unterschiedliche Zeitschlitze zugeordnet werden, kann unter Umständen eine Modulation mit unterschiedlichen Frequenzen sinnvoll sein, da auf diese Weise das System durch Redundanz sicherer wird.

Die Erfindung baut auf dem gattungsgemäßen Verfahren dadurch auf, dass das Reflektieren durch einen modulierenden Backscatter-Prozess erfolgt und das Backscatter-Vorrichtungen über ein durch die Modulation aufgepragtes Muster voreinander unterschielbar sind.

Auf der Grundlage des erfindungsgemäßen Verfahrens werden die Vorteile und Besonderheiten des erfindungsgemäßen Systems umgesetzt. Dies gilt auch für die nachfolgend angegebenen besonders bevorzugten Ausführungsformen des erfindungsgemäßen Verfahrens.

Weiterhin ist es bevorzugt, dass mehrere Elemente zum Reflektieren beziehungsweise Empfangen untereinander in einer Lehne und/oder einer Kopfstütze des Fahrzeugsitzes angeordnet sind.

Eine bevorzugte Weiterbildung des erfindungsgemäßen Verfahrens sieht vor, dass der Backscatter-Prozess durch eine passive, semipassive, semiaktive oder aktive Backscatter-Vorrichtung realisiert wird.

Weiterhin ist bevorzugt, dass die Sitzbelegung auf der Grundlage der Beugung der Mikrowellen die empfangene Intensität beeinflusst und dass die empfangene Intensität Informationen über die Sitzbelegung liefert.

Eine ebenfalls bevorzugte Weiterbildung des erfindungsgemäßen Verfahrens sieht vor, dass die von der Mikrowellenstrahlung zurückgelegte Wegstrecke zwischen Mikrowellensender und Mikrowellenempfänger beziehungsweise den Mitteln zum Reflektieren beziehungsweise Empfangen durch Laufzeitmessung ermittelt wird.

Weiterhin ist nützlich, dass die Position eines Sitzes ermittelt wird und dass aus dem Ergebnis des Ermittelns der Wegstrecke und dem Ergebnis des Ermittelns der Position des Sitzes ermittelt wird, ob die empfangene Strahlung von dem Mikrowellensender ausgesendet wurde.

Weitere Vorteile können erzielt werden, wenn bei dem erfindungsgemäßen Verfahren vorgesehen ist, dass in Abhängigkeit der empfangenen Strahlung Funktionen im Fahrzeug getriggert, gesperrt oder freigegeben werden.

Weiterhin wird es als vorteilhaft erachtet, wenn vorgesehen ist, dass das Aussenden und/oder das Empfangen auf der Grundlage eines in dem Fahrzeug installierten Zugangskontroll- und Startsystems erfolgt.

Ebenfalls wird es als nützlich erachtet, wenn vorgesehen ist, dass die Auswertung der empfangenen Signale durch Mittel unterstützt beziehungsweise durchgeführt wird, die im Rahmen eines in dem Fahrzeug installierten Zugangskontroll- und Startsystems eingesetzt werden.

Das erfindungsgemäße Verfahren kann sich dadurch als vorteilhaft erweisen, dass der Strahlungsweg geradlinig verläuft.

Ebenfalls kann vorteilhaft sein, dass der Strahlungsweg auf Umwegen verläuft.

Weiterhin ist es nützlich, dass die mehreren Elemente zum Reflektieren beziehungsweise Empfangen während bestimmter Zeitintervalle selektiv aktiviert beziehungsweise deaktiviert werden und dass über die Zuordnung der Elemente zu den Zeitintervallen die Elemente voneinander unterschieden werden.

In diesem Zusammenhang kann nützlicherweise vorgesehen sein, dass die Backscatter-Prozesse, die an den unterschiedlichen Elementen erfolgen, dieselbe Modulationsfrequenz verwenden.

Das erfindungsgemäße Verfahren kann sich aber auch dadurch als vorteilhaft erweisen, dass die Backscatter-Prozesse, die an den unterschiedlichen Elementen erfolgen, unterschiedliche Modulationsfrequenzen verwenden.

Der Erfindung liegt die Erkenntnis zugrunde, dass eine besonders zuverlässige und dennoch einfache und kostengünstige Sitzbelegungserkennung zur Verfügung gestellt werden kann, indem eine Vielzahl von kleinflächigen Reflektoren in den Fahrzeugsitzen angeordnet werden. Dies ermöglicht eine scharfe Trennung zwischen dem leichten Vorbeugen einer Person und dem sogenannten Out-of-Position-Fall, das heißt dem Fall, in dem es auf keinen Fall mehr zu einer Zündung des Airbags kommen darf. Im Zuge des Vorbeugens der Person kommt es immer wieder zu steilen Flanken im Intensitätsverlauf, nämlich dann, wenn ein zusätzliches Element im Fahrzeugsitz von der Mikrowellenstrahlung erreicht wird. Gleiches gilt umgekehrt natürlich auch beim Zurücklehnen der Person, das heißt beispielsweise beim Übergang von dem Out-of-Position-Fall in eine ordnungsgemäßen Sitzposition. Im Rahmen des erfindungsgemäßen Systems können in vorteilhafter Weise Beugungserscheinungen der Mikrowellenstrahlung genutzt werden, die im Vergleich zu Systemen, die beispielsweise mit Infrarotstrahlung arbeiten, ausreichend ausgeprägt ist. Die Verwendung von Mikrowellenstrahlung ist auch aus dem Grunde vorteilhaft, da im Vergleich zur Verwendung von anderen Wellenformen, zum Beispiel Ultraschall, Laserstrahlung beziehungsweise Licht- und Infrarotstrahlung, eine starke Absorption im menschlichen Körper erfolgt. Die Ausbreitung der Mikrowellenstrahlung erfolgt unabhängig von Druck, Temperatur, Helligkeit und sonstiger Umgebungsbedingungen. Das Messverfahren ist aufgrund der Einfachheit der Auswertung sehr schnell, so dass eine dynamische Messung, beispielsweise erst im Fall eines Aufpralls, möglich ist. Weitere Vorzüge der Erfindung sind daran zu erkennen, dass eine Erkennung der Sitzbelegung mit sehr hoher Geschwindigkeit stattfinden kann. Die Zeit für die Erfassung kann beispielsweise im Millisekundenbereich liegen. Hierdurch ist es möglich, der Airbagsteuerung eine Dynamik zu vermitteln, die es beispielsweise gestattet, nach bereits erfolgter Zündung des Airbags in Abhängigkeit der Sitzbelegung beziehungsweise der Position/Neigung der Person auf dem Sitz die Füllung des Airbags zu beeinflussen, vorzugsweise durch Druckverminderung.

Die Erfindung wird nun mit Bezug auf die begleitenden Zeichnungen anhand besonders bevorzugter Ausführungsformen beispielhaft erläutert.

Es zeigen:
- Figur 1: eine bevorzugte Ausführungsform eines erfindungsgemäßen Systems mit einer Person in einer ersten Sitzposition;
- Figur 2: die Ausführungsform gemäß Figur 1 mit einer Person in einer zweiten Sitzposition;
- Figur 3: ein Diagramm zur Erläuterung der Erfindung;
- Figur 4: eine weitere Ausführungsform des erfindungsgemäßen Systems mit einer Person in einer ersten Sitzposition;
- Figur 5: die Ausführungsform gemäß Figur 4 mit einer Person in einer zweiten Sitzposition;
- Figur 6: einen Fahrzeugsitz zur Verwendung in einem erfindungsgemäßen System mit den Umrissen der Oberkörper von zwei unterschiedlich großen Personen;
- Figur 7: einen Fahrzeugsitz zur Verwendung in einem erfindungsgemäßen System mit den Umrissen der Oberkörper von Personen mit unterschiedlicher Statur;
- Figur 8: die Ausführungsform gemäß Figur 4 mit einer Sitzbelegung durch einen Babysitz;
- Figur 9: die Ausführungsform gemäß Figur 1 mit einer Sitzbelegung durch einen Kindersitz; und
- Figur 10: eine Schnittansicht von oben auf die in Figur 9 dargestellte Anordnung.

Bei der nachfolgenden Beschreibung von bevorzugten Ausführungsformen der vorliegenden Erfindung bezeichnen gleiche Bezugszeichen gleiche oder vergleichbare Komponenten.

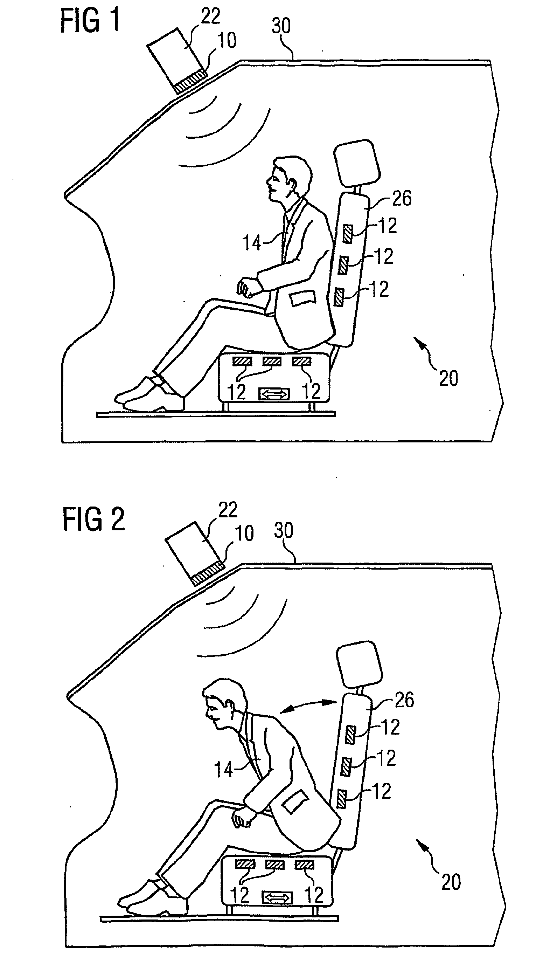

Figur 1 zeigt eine bevorzugte Ausführungsform eines erfindungsgemäßen Systems mit einer Person in einer ersten Sitzposition. Figur 2 zeigt die Ausführungsform gemäß Figur 1 mit einer Person in einer zweiten Sitzposition. Eine Mikrowellensende- und -empfangsvorrichtung 10 ist in der Nähe der Dachbedieneinheit 30 eines Fahrzeugs angeordnet und mit einer Steuereinheit 22 verbunden. In einem Fahrzeugsitz 20 sind mehrere Reflektoren 12 angeordnet, die je nach Ausführungsform als Backscatter oder als einfache elektrisch leitende Folien ausgelegt sein können. Der Sitz 20 kann in üblicher Weise verschoben werden, wobei besonders bevorzugt ist, wenn die Position des Sitzes 20 ermittelt werden kann.

Eine auf dem Sitz 20 sitzende Person 14 ist in den Figuren 1 und 2 in unterschiedlichen Positionen dargestellt. In Figur 1 sitzt die Person 14 ordnungsgemäß. In Figur 2 ist die Person 14 nach vorne geneigt, so dass der Oberkörper der Person 14 einen Abstand zur Lehne 26 des Sitzes 20 hat. Die Position in Figur 2 kann auch als Out-of-Position-Fall bezeichnet werden.

Von der Mikrowellensende- und -empfangsvorrichtung 10 ausgesendete Mikrowellenstrahlung kann nun in Abhängigkeit der Sitzposition mehr oder weniger Reflektoren 12 und dabei insbesondere mehr oder weniger in der Lehne 26 des Sitzes 20 angeordnete Reflektoren 12 erreichen. Dementsprechend hängt die von den Reflektoren 12 reflektierte Intensität und von der Mikrowellensende- und -empfangsvorrichtung 10 folglich empfangene Intensität von der Sitzposition der Person 14 ab.

Neben der Auswertung von Reflektoren in der Lehne beziehungsweise der Kopfstütze, ist es auch besonders nützlich, die Sensoren in der Sitzfläche auszuwerten, da auch auf dieser Grundlage die Sitzbelegung erkannt werden kann, insbesondere auch Situationen, die als Out-of-Position-Fall bezeichnet werden können.

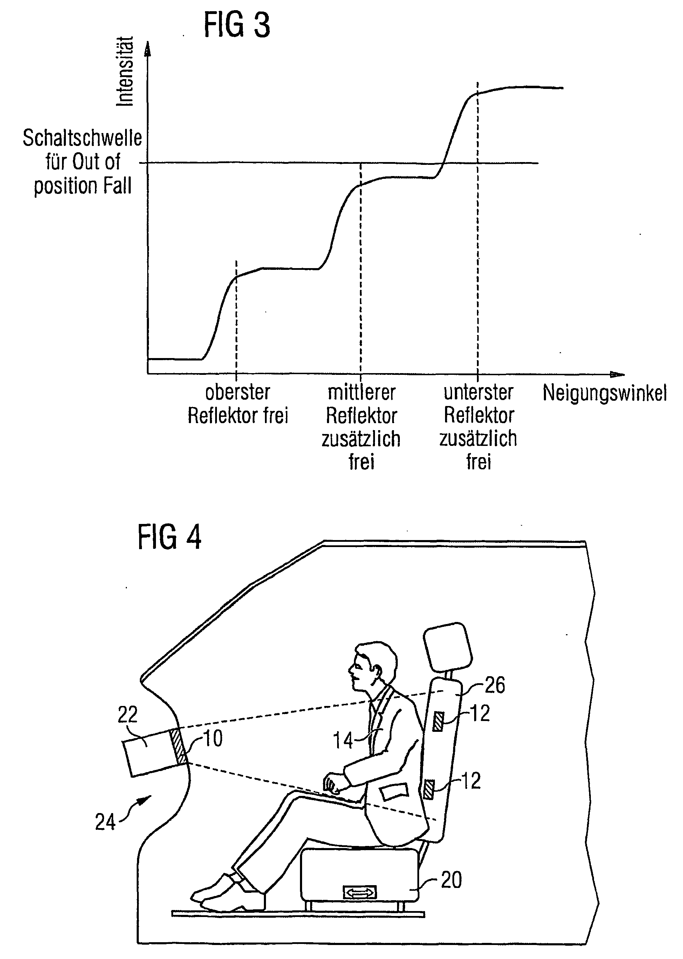

Figur 3 zeigt ein Diagramm zur Erläuterung der Erfindung. Der dargestellte Intensitätsverlauf in Abhängigkeit des Neigungswinkels der in den Figuren 1 und 2 dargestellten Person 14 resultiert aus dem aufeinanderfolgenden Freigeben der unterschiedlichen Reflektoren 12 in der Sitzlehne 26. Neigt sich die Person 14 ausgehend von der in Figur 1 dargestellten Position nach vorne, so wird zuerst der oberste Reflektor freigegeben, was eine Flanke im Intensitätsverlauf zur Folge hat. Bei weiterem Vorneigen der Person 14 ändern sich die Verhältnisse dann zunächst nicht oder kaum. Erst wenn der nächste Reflektor 12, das heißt der mittlere Reflektor 12 in der Lehne 26 freigegeben wird, kommt es zur nächsten Flanke im Intensitätsverlauf. Entsprechendes geschieht beim Freigeben des untersten Reflektors 12. Wählt man nun die Anordnung der Reflektoren 12 und die Schaltschwelle für den Out-of-Position-Fall in aufeinander abgestimmter Art und Weise, so kann die Schaltschwelle beispielsweise, wie in Figur 3 dargestellt, in eine Flanke des Intensitätsverlaufs gelegt werden. Auf diese Weise kann ein Neigungswinkel ohne große Schwankungsbreite definiert werden, bei dem das Vorliegen des Out-of-Position-Falls angenommen wird.

Besonders nützlich ist es, wenn die verschiedenen Reflektoren voneinander unterschieden werden können. Dies betrifft sowohl die in einem Fahrzeugsitz angeordneten Reflektoren als auch Reflektoren, die in unterschiedlichen Fahrzeugsitzen innerhalb des Fahrzeugs beziehungsweise an sonstigen Positionen innerhalb des Fahrzeugs angeordnet sein können. Besonders nützlich ist es, als Reflektoren Backscatter-Vorrichtungen zu verwenden, die während verschiedener Zeitintervalle aktiviert werden. Diese Aktivierung kann beispielsweise durch Bestromung der jeweiligen Backscatter-Vorrichtung erfolgen, während die Backscatter-Vorrichtung in nicht bestromtem Zustand deaktiviert ist. Sind nun die aktiven zeitintervalle eindeutig den Backscatter-Vorrichtungen zugeordnet, so können über diese Zuordnung die einzelnen Backscatter-Vorrichtungen eindeutig erkannt werden. Dabei kann mit schmalbandiger Mikrowellenstrahlung gearbeitet werden, da eine Unterscheidung der unterschiedlichen Backscatter-Vorrichtungen über unterschiedliche Modulationsfrequenzen nicht erforderlich ist. Über eine solche Modulation mit unterschiedlichen Frequenzen kann eine Unterscheidung der Backscatter-Vorrichtungen aber auch alternativ oder zusätzlich zu der Unterscheidung über die Zeitintervalle vorgenommen werden.

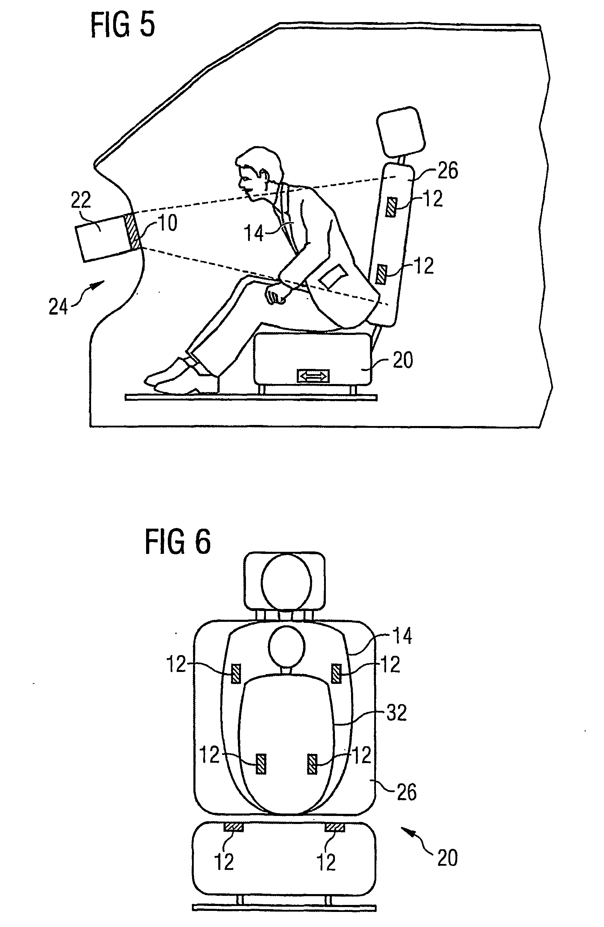

Figur 4 zeigt eine weitere Ausführungsform des erfindungsgemäßen Systems mit einer Person in einer ersten Sitzposition. Figur 5 zeigt die Ausführungsform gemäß Figur 4 mit einer Person in einer zweiten Sitzposition. Bei dem hier dargestellten System sind Reflektoren 12 nur in der Lehne 26 des Sitzes 20 angeordnet, das heißt im Gegensatz zu den Darstellungen gemäß den Figuren 1 und 2 nicht in der Sitzfläche. Dies ist in vielen Fällen ausreichend, um den in Figur 5 dargestellten Out-of-Position-Fall zu erkennen. Als weiterer Unterschied zu den Figuren 1 und 2 sind bei den Systemen gemäß den Figuren 4 und 5 die Mikrowellensende- und -empfangsvorrichtung 10 und das ihr zugeordnete Steuergerät 22 im Cockpit 24 des Fahrzeugs angeordnet. Auch hier erfolgt ein sukzessives Freigeben der Reflektoren 12 beim Vorbeugen der Person 14. Bei dieser Anordnung spielen Beugungserscheinungen der Mikrowellen eine wichtige Rolle, da bei der Darstellung gemäß Figur 3 nach wie vor die direkte Sichtverbindung zwischen den Reflektoren 12 und der Mikrowellensende- und -empfangsvorrichtung 10 nicht oder nur teilweise vorliegt. Aufgrund von Beugungseffekten gelangen die Mikrowellen aber dennoch von der Mikrowellensende- und -empfangsvorrichtung 10 zu den Reflektoren 12 und umgekehrt von den Reflektoren 12 zur Mikrowellensende- und -empfangsvorrichtung 10.

Figur 6 zeigt einen Fahrzeugsitz zur Verwendung in einem erfindungsgemäßen System mit den Umrissen der Oberkörper von zwei unterschiedlich großen Personen. Hier ist ein weiteres Anwendungsbeispiel angegeben, bei dem die Vorteile der Verwendung kleinflächiger Reflektoren 12 in einem Fahrzeugsitz 20 beziehungsweise insbesondere in der Lehne des Fahrzeugssitzes 26 veranschaulicht werden. Die Reflektoren 12 sind in Form eines Arrays angeordnet. Eine große Person 14 deckt sämtliche in der Lehne 26 angeordnete Reflektoren 12 ab, während eine kleine Person 32, beispielsweise ein Kind, nur die unteren Reflektoren 12 abdeckt. Mit dem System kann also eindeutig zwischen großen und kleinen Personen unterschieden werden, zumal nicht nur ein gradueller Unterschied in den reflektierten Intensitäten festzustellen sein wird, sondern ein sprunghafter Unterschied aufgrund der vollständigen Freigabe der kleinflächigen oberen Reflektoren 12 bei der Sitzbewegung durch die kleine Person 32.

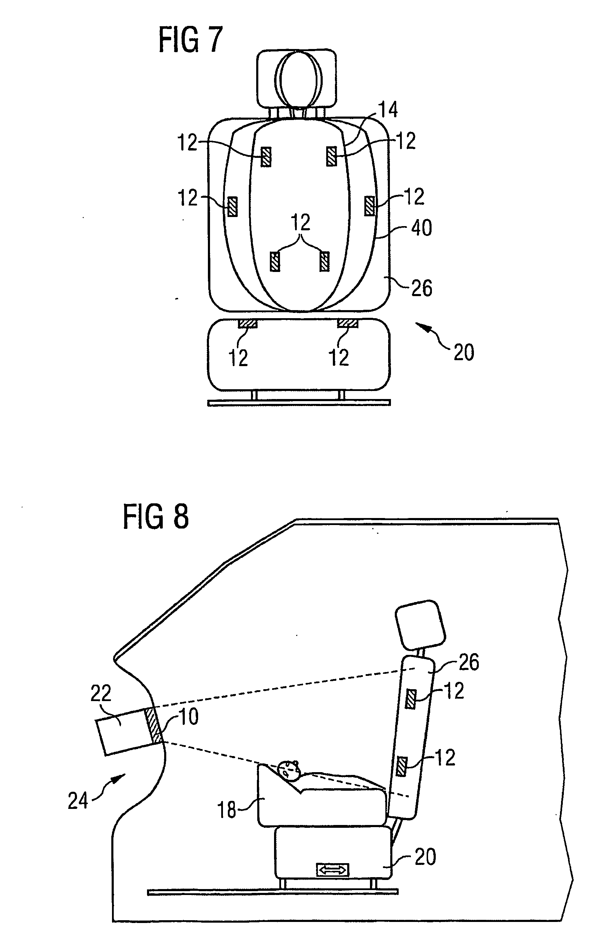

Figur 7 zeigt einen Fahrzeugsitz zur Verwendung in einem erfindungsgemäßen System mit den Umrissen der Oberkörper von zwei unterschiedlich großen Personen. Dargestellt ist eine großvolumige Personen 40 und eine Person 14 mit geringerem Körpervolumen. Bei geeigneter Anordnung der Reflektoren 12 in der Lehne 26 des Fahrzeugsitzes 20 können von der großvolumigen Person 40 sämtliche Reflektoren 12 abgedeckt werden, während von der dünneren Person 14 die äußeren Reflektoren 12 freigegeben werden.

Figur 8 zeigt die Ausführungsform gemäß Figur 4 mit einer Sitzbelegung durch einen Babysitz. Hier befindet sich ein Baby in einem Kindersitz, vorliegend in einem sogenannten Reboard-Sitz 18. Dieser ist ordnungsgemäß auf dem Beifahrersitz 20 befestigt. Aufgrund der relativen Positionen von Mikrowellensende- und -empfangsvorrichtung 10, den Reflektoren 12 und dem Reboard-Sitz 18 findet nur eine geringe Dämpfung der Mikrowellenstrahlung statt. Folglich wird ein Auslösen des Airbags verhindert. Zusätzlich ist es möglich und unter Umständen sehr sinnvoll, Reflektoren an der Rückseite des Reboard-Sitzes 18 zu befestigen. Damit kann, beispielsweise bei spezieller Modulation der Mikrowellenstrahlung durch Reflektoren, aufgrund einer Laufzeitmessung oder durch Zuordnung unterschiedlicher Zeitschlitze zu den einzelnen Reflektoren, die Situation mit Kindersitz 18 auf dem Sitz 22 von der Situation ohne Objekt auf dem Sitz 20 unterschieden werden. Werden bei dem erfindungsgemäßen System die Reflektoren 12 beispielsweise mit einem metallischen Gegenstand abgeschirmt, so führt dies zu einer starken Reflexion. Die Intensität dieser Reflexion kann möglicherweise in derselben Größenordnung liegen wie die Intensität der Reflexion durch die Reflektoren 12. Es gibt nun verschiedene Möglichkeiten, wie die Steuereinheit 22 die unterschiedlichen Situationen erkennen kann. Sind die Reflektoren Backscatter-Vorrichtungen mit eine eindeutigen Kodierung, sei es über die Modulationsfrequenz oder die Zeitschlitze, so wird auf dieser Grundlage die Reflexion durch den abschattenden metallischen Gegenstand eindeutig erkannt. Alternativ oder zusätzlich kann die Reflexion durch einen abschattenden metallischen Gegenstand auf der Grundlage einer Laufzeitmessung erkannt werden, insbesondere wenn man die Laufzeit mit der tatsächlichen Sitzposition vergleicht, die durch einen zusätzlichen Sensor ermittelt werden kann.

Ebenfalls ist es vorteilhaft, dass Gegenstände ohne oder mit geringer elektrischer Leitfähigkeit vor den Reflektoren 12 die Reflektoren 12 nur geringfügig abschirmen. Die von der Steuereinheit empfangenen Signale entsprechen daher der Situation "leerer Sitz", so dass in richtiger Weise ein Auslösen des Airbags gesperrt wird.

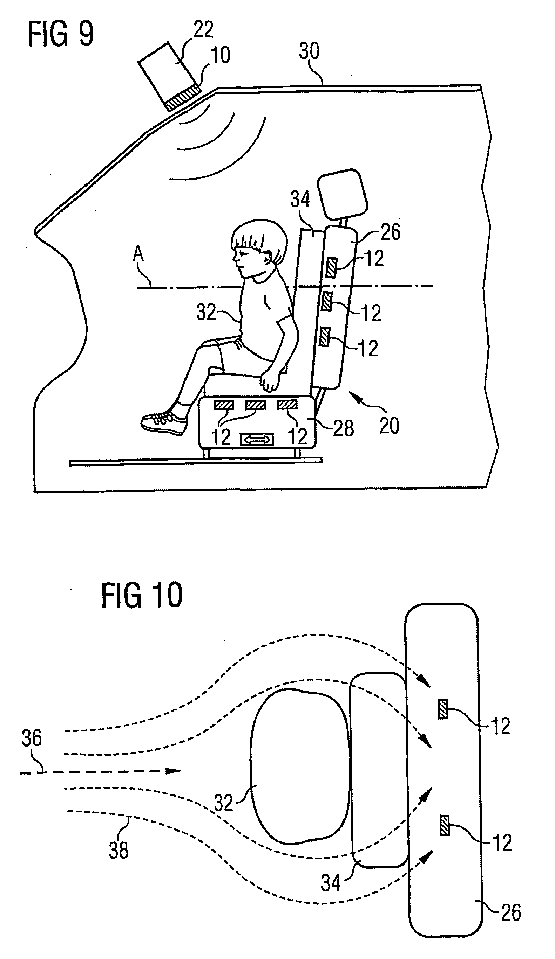

Figur 9 zeigt die Ausführungsform gemäß Figur 1 mit einer Sitzbelegung durch einen Kindersitz. Die hier dargestellte Situation kann auf der Grundlage des erfindungsgemäßen Systems auch von einer sich vorbeugenden erwachsenen Person unterschieden werden. Ein Kind 32 sitzt auf einem Kindersitz 34, der auf dem Sitz 20 angeordnet ist. Sowohl in der Sitzfläche 28 des Sitzes 20 als auch in der Lehne 26 des Sitzes 20 sind mehrere Reflektoren angeordnet. Aufgrund des Kindersitzes 34, der im Allgemeinen die Mikrowellen sehr viel weniger absorbiert als der Körper des Kindes 32, können, insbesondere aufgrund von Beugungserscheinungen, Mikrowellen ihren Weg zwischen der Mikrowellensende- und -empfangsvorrichtung 10 und den Reflektoren 12 in der Rückenlehne 26 beziehungsweise der Sitzfläche 28 finden. Die Reflektoren 12 in der Sitzfläche 28 empfangen daher eine höhere Intensität als sie empfangen könnten, wenn eine erwachsene Person direkt auf der Sitzfläche 28 säße.

Somit lassen sich durch geeignete Anordnung von mehreren Reflektoren 12 und dementsprechende geeignete Anordnung der Mikrowellensende- und -empfangsvorrichtung 10 unterschiedliche Situationen im Hinblick auf die Sitzbelegung im Fahrzeug erkennen.

Figur 10 zeigt eine Schnittansicht von oben auf die in Figur 9 dargestellte Anordnung. Der Schnitt in Figur 10 erfolgt entlang der in Figur 9 durch A gekennzeichneten Ebene. Es sind verschiedene Wege dargestellt, wie Mikrowellenstrahlung die Reflektoren 12 in der Rückenlehne 26 erreichen kann, wobei von der Situation eines Kindes 32 auf einem Kindersitz 34 ausgegangen wird. Zum einen gibt es den direkten Weg 32 zwischen Mikrowellensende- und -empfangsvorrichtung 10 und den Reflektoren 12, die in der vorliegenden Situation durch das Kind 32 abgeschirmt sind. Aufgrund der Abstände zwischen dem Kind 32 und den Reflektoren 12, die durch den Kindersitz 34 in jedem Fall aufrechterhalten werden, können jedoch Mikrowellen zum Beispiel durch Beugung um den Körper und durch Reflexion beziehungsweise Streuung auch oft auf indirekten Wegen 38 von der Mikrowellensende- und -empfangsvorrichtung 10 zu den Reflektoren 12 und in umgekehrte Richtung gelangen. Dies wird durch den Kindersitz 34 nur unwesentlich behindert, da er im Vergleich zum menschlichen Körper ein sehr viel geringeres Absorptionsvermögen aufweist.

Das Prinzip der vorliegenden Erfindung wurde aufgrund der vorstehenden Beschreibung der Zeichnungen anhand eines Systems erläutert, bei dem Reflektoren, das heißt insbesondere Backscatter-Vorrichtungen, im Fahrzeugsitz angeordnet sind.

In diesem Fall sind ein Mikrowellensender und ein Mikrowellenempfänger erforderlich. Der Mikrowellensender sendet Mikrowellenstrahlung in Richtung der Reflektoren aus. Die Reflektoren reflektieren die Mikrowellenstrahlung in Richtung des Mikrowellenempfängers. Vorzugsweise sind Mikrowellensender und Mikrowellenempfänger in Form einer Mikrowellensende-und -empfangsvorrichtung realisiert. Die Erfindung bezieht sich aber auch auf Systeme, bei denen anstelle der kleinflächigen Reflektoren kleinflächige Empfänger im Sitz angeordnet sind. In diesem Fall ist ein Mikrowellensender ausreichend, der Mikrowellenstrahlung in Richtung der in dem Sitz angeordneten Empfänger aussendet. Die vorteilhaften Intensitätsverläufe aufgrund der Neigung einer Person auf dem Sitz können so ebenfalls erreicht werden, insbesondere indem die Intensitäten der einzelnen im Sitz angeordneten Empfänger summiert werden.

Die Erfindung lässt sich folgendermaßen zusammenfassen. Ein System zum Erkennen der Sitzbelegung in einem Fahrzeug umfasst einen Mikrowellensender 10 und mehrere kleinflächige Reflektoren 12, die in einem Fahrzeugsitz 20, insbesondere in der Lehne 26 des Fahrzeugssitzes 20 angeordnet sind. Neigt sich eine den Sitz 20 belegende Person 14 nach vorn, so werden mehr oder weniger Reflektoren 12 freigegeben. Folglich kommt es jedes Mal beim zusätzlichen Freigeben eines Reflektors zu einem Intensitätssprung. Diese Intensitätssprünge können in vorteilhafter Weise für die genaue Erkennung der Position der Person auf dem Sitz verwendet werden. Insbesondere können bei starkem Vorbeugen der Person 14 (sogenannter Out-of-Position-Fall) das Zünden eines Airbags und die damit in Verbindung stehenden Risiken vermieden werden. Anstelle von Reflektoren 12 können auch Empfänger in dem Sitz 20 angeordnet werden.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

## Patentansprüche

1. System zum Erkennen der Sitzbelegung in einem Fahrzeug, mit
- mindestens einem Mikrowellensender (10),
- mehreren in einem Fahrzeugsitz (20) angeordneten Reflektoren (12),
- mindestens einem Mikrowellenempfänger (10),
- wobei der mindestens eine Mikrowellensender (10) und die Reflektoren (12) so angeordnet sind,
- dass die von dem Mikrowellensender (10) ausgesendete Strahlung die Reflektoren (12) zumindest bei unbelegtem Fahrzeugsitz (20) erreichen kann und
- dass in Abhängigkeit der Sitzbelegung die von den reflektoren (12) reflektierte Strahlung beeinflusst werden kann,
**dadurch gekennzeichnet ,**
- **dass** die Reflektoren (12) modulierende Backscatter-Vorrichtungen sind und
- **dass** Backscatter-Vorrichtungen über ein durch die Modulation aufgeprägtes Muster voneinander unterscheidbar sind.

2. System nach Anspruch 1,
**dadurch gekennzeichnet ,**
**dass** Reflektoren (12) untereinander in einer Lehne (26) und/oder einer Kopfstütze des Fahrzeugsitzes (20) angeordnet sind.

3. System nach Anspruch 1 oder 2,
**dadurch gekennzeichnet,**
**dass** die Backscatter-Vorrichtung (12) als passive, semipassive oder aktive Backscatter-Vorrichtung (12) realisiert ist.

4. System nach einem der vorangehenden Ansprüche,
**dadurch gekennzeichnet ,**
- **dass** die Sitzbelegung auf der Grundlage der Beugung der Mikrowellen die empfangene Intensität beeinflusst und
- **dass** die empfangene Intensität Informationen über die Sitzbelegung liefert.

5. System nach einem der vorangehenden Ansprüche,
**dadurch gekennzeichnet ,**
**dass** der mindestens eine Mikrowellensender und der mindestens eine Mikrowellenempfänger als mindestens eine Mikrowellensende- und -empfangsvorrichtung (10) mit einer Sende- und Empfangsantenne realisiert sind.

6. System nach einem der vorangehenden Ansprüche,
**dadurch gekennzeichnet ,**
**dass** eine Steuereinheit (22) vorgesehen ist, die in Abhängigkeit der empfangenen Strahlung Funktionen im Fahrzeug triggert, sperrt oder freigibt.

7. System nach einem der vorangehenden Ansprüche,
**dadurch gekennzeichnet ,**
**dass** der mindestens eine Mikrowellensender (10) und/oder der mindestens eine Mikrowellenempfänger (10) Bestandteile eines in dem Fahrzeug installierten Zugangskontroll- und Startsystems sind.

8. System nach einem der vorangehenden Ansprüche,
**dadurch gekennzeichnet ,**
**dass** die Auswertung der von dem Mikrowellenempfänger (10) empfangenen Signale durch Mittel unterstützt beziehungsweise durchgeführt wird, die im Rahmen eines in dem Fahrzeug installierten Zugangskontroll- und Startsystems eingesetzt werden.

9. System nach einem der vorangehenden Ansprüche,
**dadurch gekennzeichnet ,**
**dass** der Strahlungsweg geradlinig verläuft.

10. System nach einem der Ansprüche 1 bis 8,
**dadurch gekennzeichnet ,**
**dass** der Strahlungsweg auf Umwegen verläuft.

11. System nach einem der vorangehenden Ansprüche,
**dadurch gekennzeichnet ,**
- **dass** die Reflektoren (12) während bestimmter Zeitintervalle selektiv aktiviert beziehungsweise deaktiviert werden können und
- **dass** über die Zuordnung der Reflektoren (12) zu den Zeitintervallen die Reflektoren voneinander unterscheidbar sind.

12. System nach einem der vorangehenden Ansprüche,
**dadurch gekennzeichnet,**
**dass** die Backscatter-Vorrichtungen (12) mit derselben Frequenz modulierbar sind.

13. System nach einem der vorangehenden Ansprüche,
**dadurch gekennzeichnet ,**
**dass** die Backscatter-Vorrichtungen (12) mit unterschiedlichen Frequenzen modulierbar sind.

14. Verfahren zum Erkennen der Sitzbelegung in einem Fahrzeug, mit den Schritten
- Aussenden von Mikrowellenstrahlung,
- Reflektieren der Mikrowellenstrahlung durch Reflektoren (12), die in einem Fahrzeugsitz (20) angeordnet sind,
- Empfangen von Mikrowellenstrahlung,
- wobei
- die ausgesendete Strahlung die Reflektoren (12) zumindest bei unbelegtem Fahrzeugsitz (20) erreichen kann und
- in Abhängigkeit der Sitzbelegung die von den Reflektoren (12) reflektierte Strahlung beeinflusst werden kann,
**dadurch gekennzeichnet ,**
- **dass** das Reflektieren durch einen modulierenden Backscatter-Prozess erfolgt und
- **dass** Backscatter-Vorrichtungen über ein durch die Modulation aufgeprägtes Muster voneinander unterscheidbar sind.

15. Verfahren nach Anspruch 14,
**dadurch gekennzeichnet ,**
**dass** Reflektoren (12) untereinander in einer Lehne (26) und/oder einer Kopfstütze des Fahrzeugsitzes (20) angeordnet sind.

16. Verfahren nach Anspruch 14 oder 15,
**dadurch gekennzeichnet,**
**dass** der Backscatter-Prozess durch eine passive, semipassive oder aktive Backscatter-Vorrichtung (12) realisiert wird.

17. Verfahren nach einem der Ansprüche 14 bis 16,
**dadurch gekennzeichnet,**
- **dass** die Sitzbelegung auf der Grundlage der Beugung der Mikrowellen die empfangene Intensität beeinflusst und
- **dass** die empfangene Intensität Informationen über die Sitzbelegung liefert.

18. Verfahren nach einem der Ansprüche 14 bis 17,
**dadurch gekennzeichnet ,**
**dass** in Abhängigkeit der empfangenen Strahlung Funktionen im Fahrzeug getriggert, gesperrt oder freigegeben werden.

19. Verfahren nach einem der Ansprüche 14 bis 18,
**dadurch gekennzeichnet ,**
**dass** das Aussenden und/oder das Empfangen auf der Grundlage eines in dem Fahrzeug installierten Zugangskontroll- und Startsystems erfolgt.

20. Verfahren nach einem der Ansprüche 14 bis 19,
**dadurch gekennzeichnet ,**
**dass** die Auswertung der empfangenen Signale durch Mittel unterstützt beziehungsweise durchgeführt wird, die im Rahmen eines in dem Fahrzeug installierten Zugangskontroll- und Startsystems eingesetzt werden.

21. Verfahren nach einem der Ansprüche 14 bis 20,
**dadurch gekennzeichnet ,**
**dass** der Strahlungsweg geradlinig verläuft.

22. Verfahren nach einem der Ansprüche 14 bis 20,
**dadurch gekennzeichnet,**
**dass** der Strahlungsweg auf Umwegen verläuft.

23. Verfahren nach einem der Ansprüche 14 bis 22,
**dadurch gekennzeichnet ,**
- **dass** die Reflektoren (12) während bestimmter Zeitintervalle selektiv aktiviert beziehungsweise deaktiviert werden und
- **dass** über die Zuordnung der Reflektoren (12) zu den Zeitintervallen die Reflektoren voneinander unterschieden werden.

24. Verfahren nach einem der Ansprüche 14 bis 23,
**dadurch gekennzeichnet ,**
**dass** die Backscatter-Prozesse, die an den unterschiedlichen Reflektoren (12) erfolgen, dieselbe Modulationsfrequenz verwenden.

25. Verfahren nach einem der Ansprüche 14 bis 23,
**dadurch gekennzeichnet ,**
**dass** die Backscatter-Prozesse, die an den unterschiedlichen Reflektoren (12) erfolgen, unterschiedliche Modulationsfrequenzen verwenden.

## Claims

1. System for detecting the seat occupancy in a vehicle, with
- at least one microwave transmitter (10),
- several reflectors (12) arranged within a vehicle seat (20),
- at least one microwave transmitter (10),
- in which case at least one microwave transmitter (10) and the reflectors (12) are arranged in such a way,
- that the radiation transmitted by the microwave transmitter (10) can at least reach the reflectors (12) in the case of an unoccupied vehicle seat (20) and
- that depending on the seat occupancy, the radiation reflected by the reflectors (12) can be influenced,
**characterised in that**
- the reflectors (12) are modulating backscatter devices and
- that backscatter devices can be distinguished from one another by means of the pattern shown by the modulation.

2. System according to claim 1,
**characterised in that**
reflectors (12) are arranged among each other within a backrest (26) of the vehicle seat and/or a headrest of a vehicle seat (20).

3. System according to claim 1 or 2,
**characterised in that**
the backscatter device (12) is implemented as a passive, semipassive, semiactive or an active backscatter device (12).

4. System according to one of the preceding claims,
**characterised in that**
- the seat occupancy influences the received intensity on the basis of the diffraction of the microwaves and
- that the received intensity provides information about the seat occupancy.

5. System according to one of the preceding claims,
**characterised in that**
at least one microwave transmitter and one microwave receiver are used as at least one microwave transmitter device and a microwave receiver device (10) with a transmitter antenna and a receiver antenna.

6. System according to one of the preceding claims,
**characterised in that**
a control unit (22) is provided which triggers, blocks or enables functions in the vehicle depending on the radiation which has been received.

7. System according to one of the preceding claims,
**characterised in that**
at least one microwave transmitter (10) and/or at least one microwave receiver (10) form part of an access control and start system installed within the vehicle.

8. System according to one of the preceding claims,
**characterised in that**
the evaluation of signals received by the microwave receiver (10) can be supported or carried out by the means which are used within the framework of an access control and start system installed within the vehicle.

9. System according to one of the preceding claims,
**characterised in that**
the radiation path runs in a straight line.

10. System according to one of the claims 1 to 8,
**characterised in that**
the radiation path runs by alternate routes.

11. System according to one of the preceding claims,
**characterised in that**
- the reflectors (12) can be selectively activated or deactivated during specific time intervals and
- that by allocating the reflectors (12) to the time intervals, the reflectors can be distinguished from one another.

12. System according to one of the preceding claims,
**characterised in that**
the backscatter devices (12) can be modulated with the same frequency.

13. System according to one of the preceding claims,
**characterised in that**
the backscatter devices (12) can be modulated with different frequencies.

14. Method for detecting the seat occupancy in a vehicle with the stages
- Transmitting microwave radiation,
- reflecting the microwave radiation by using reflectors (12) which are arranged in a vehicle seat (20),
- receiving microwave radiation,
- in which case
- the transmitted radiation can reach the reflectors (12) at least in the case of an unoccupied vehicle seat (20) and
- that depending on the seat occupancy, the radiation reflected by the reflectors (12) can be influenced,
**characterised in that**
- reflecting is carried out by means of a modulating backscatter process and
- that backscatter devices can be distinguished from one another by means of the pattern shown by the modulation.

15. Method according to claim 14,
**characterised in that**
reflectors (12) are arranged among each other within a backrest (26) of the vehicle seat and/or a headrest of a vehicle seat (20).

16. Method according to claim 14 or 15,
**characterised in that**
the backscatter process is implemented by a passive, semipassive, semiactive or an active backscatter device (12).

17. Method according to one of the claims 14 to 16,
**characterised in that**
- the seat occupancy influences the received intensity on the basis of the diffraction of the microwaves and
- that the received intensity provides information about the seat occupancy.

18. Method according to one of the claims 14 to 17,
**characterised in that**
provision is made for the triggering, blocking or the enabling functions in the vehicle depending on the radiation which has been received

19. Method according to one of the claims 14 to 18,
**characterised in that**
the transmitting and/or the receiving takes place on the basis of an access control and start system installed within the vehicle.

20. Method according to one of the claims 14 to 19,
**characterised in that**
the evaluation of the received signals is supported or carried out by the means which are used within the framework of an access control and start system installed within the vehicle.

21. Method according to one of the claims 14 to 20,
**characterised in that**
the radiation path runs in a straight line.

22. Method according to one of the claims 14 to 20,
**characterised in that**
the radiation path runs by alternate routes.

23. Method according to one of the claims 14 to 22,
**characterised in that**
- the reflectors (12) are selectively activated or deactivated during specific time intervals and
- that by allocating the reflectors (12) to the time intervals, the reflectors are distinguished from one another.

24. Method according to one of the claims 14 to 23,
**characterised in that**
backscatter processes which occur at the different reflectors (12) use the same modulation frequency.

25. Method according to one of the claims 14 to 23,
**characterised in that**
backscatter processes which occur at the different reflectors (12) use different modulation frequencies.

## Revendications

1. Système permettant de reconnaître l'occupation des sièges dans un véhicule, ledit système comprenant
- au moins un émetteur de micro-ondes (10)
- plusieurs réflecteurs (12) disposés dans un siège de véhicule (20),
- au moins un récepteur de micro-ondes (10),
l'émetteur de micro-ondes (10) - dont il existe au moins un - et les réflecteurs (12) étant disposés de telle sorte que
- le rayonnement émis par l'émetteur de micro-ondes (10) peut atteindre les réflecteurs (12) au moins lorsque le siège de véhicule (20) est inoccupé et
- le rayonnement réfléchi par les réflecteurs (12) peut être influencé en fonction de l'occupation du siège,
**caractérisé en ce que**
- les réflecteurs (12) sont des dispositifs à rétrodiffusion modulée et
- les dispositifs à rétrodiffusion peuvent être distingués entre eux par un dessin imprimé par la modulation.

2. Système selon la revendication 1,
**caractérisé en ce que** des réflecteurs (12) sont disposés les uns au-dessous des autres dans un dossier (26) et/ou dans un appui-tête du siège de véhicule (20).

3. Système selon la revendication 1 ou 2,
**caractérisé en ce que** le dispositif à rétrodiffusion (12) est réalisé comme dispositif à rétrodiffusion (12) passif, semi-passif ou actif.

4. Système selon l'une des revendications précédentes,
**caractérisé en ce que**
- l'occupation des sièges influence l'intensité reçue sur la base de la diffraction des micro-ondes et
- l'intensité reçue fournit des informations sur l'occupation des sièges.

5. Système selon l'une des revendications précédentes,
**caractérisé en ce que** l'émetteur de micro-ondes - dont il existe au moins un - et le récepteur de micro-ondes - dont il existe au moins un - sont réalisés sous la forme d'un dispositif émetteur et récepteur de micro-ondes - dont il existe au moins un - comprenant une antenne émettrice-réceptrice.

6. Système selon l'une des revendications précédentes,
**caractérisé en ce qu'** il est prévu une unité de commande qui, en fonction du rayonnement reçu, déclenche, verrouille ou libère des fonctions dans le véhicule.

7. Système selon l'une des revendications précédentes,
**caractérisé en ce que** l'émetteur de micro-ondes (10) - dont il existe au moins un - et/ou le récepteur de micro-ondes (10) - dont il existe au moins un - sont des parties intégrantes d'un système de contrôle d'accès et de démarrage installé dans le véhicule.

8. Système selon l'une des revendications précédentes,
**caractérisé en ce que** l'évaluation des signaux reçus par le récepteur de micro-ondes (10) est assistée ou réalisée par des moyens utilisés dans le cadre d'un système de contrôle d'accès et de démarrage installé dans le véhicule.

9. Système selon l'une des revendications précédentes,
**caractérisé en ce que** la trajectoire de rayonnement s'effectue de manière rectiligne.

10. Système selon l'une des revendications 1 à 8,
**caractérisé en ce que** la trajectoire de rayonnement s'effectue de manière détournée.

11. Système selon l'une des revendications précédentes,
**caractérisé en ce que**
- les réflecteurs (12) peuvent être activés ou désactivés de manière sélective pendant des intervalles de temps déterminés et
- les réflecteurs peuvent être distingués les uns des autres grâce à l'affectation des réflecteurs (12) auxdits intervalles de temps.

12. Système selon l'une des revendications précédentes,
**caractérisé en ce que** les dispositifs à rétrodiffusion (12) peuvent être modulés avec la même fréquence.

13. Système selon l'une des revendications précédentes,
**caractérisé en ce que** les dispositifs à rétrodiffusion (12) peuvent être modulés avec des fréquences différentes.

14. Procédé permettant de reconnaître l'occupation des sièges dans un véhicule, ledit système comprenant les étapes suivantes :
- l'émission de rayonnement de micro-ondes,
- la réflexion du rayonnement de micro-ondes par des réflecteurs (12) disposés dans un siège de véhicule (20),
- la réception de rayonnement de micro-ondes,
le rayonnement émis pouvant atteindre les réflecteurs (12) au moins lorsque le siège de véhicule (20) est inoccupé et
le rayonnement réfléchi par les réflecteurs (12) pouvant être influencé en fonction de l'occupation des sièges,
**caractérisé en ce que**
- la réflexion est réalisée par un processus de rétrodiffusion modulée et
- les dispositifs à rétrodiffusion peuvent être distingués les uns des autres par un dessin imprimé par la modulation.

15. Procédé selon la revendication 14,
**caractérisé en ce que** les réflecteurs (12) sont disposés les uns au-dessous des autres dans un dossier (26) et/ou dans un appui-tête du siège de véhicule (20).

16. Procédé selon la revendication 14 ou 15,
**caractérisé en ce que** le processus de rétrodiffusion est réalisé par un dispositif à rétrodiffusion (12) passif, semi-passif ou actif.

17. Procédé selon l'une des revendications 14 à 16,
**caractérisé en ce que**
- l'occupation des sièges influence l'intensité reçue sur la base de la diffraction des micro-ondes et
- l'intensité reçue fournit des informations sur l'occupation des sièges.

18. Procédé selon l'une des revendications 14 à 17,
**caractérisé en ce que** des fonctions dans le véhicule sont déclenchées, verrouillées ou libérées en fonction du rayonnement reçu.

19. Procédé selon l'une des revendications 14 à 18,
**caractérisé en ce que** l'émission et/ou la réception s'effectue sur la base d'un système de contrôle d'accès et de démarrage installé dans le véhicule.

20. Procédé selon l'une des revendications 14 à 19,
**caractérisé en ce que** l'évaluation des signaux reçus est assistée ou réalisée par des moyens utilisés dans le cadre d'un système de contrôle d'accès et de démarrage installé dans le véhicule.

21. Procédé selon l'une des revendications 14 à 20,
**caractérisé en ce que** la trajectoire de rayonnement s'effectue de manière rectiligne.

22. Procédé selon l'une des revendications 14 à 20,
**caractérisé en ce que** la trajectoire de rayonnement s'effectue de manière détournée.

23. Procédé selon l'une des revendications 14 à 22,
**caractérisé en ce que**
- les réflecteurs (12) sont activés ou désactivés de manière sélective pendant des intervalles de temps déterminés et
- les réflecteurs sont distingués les uns des autres grâce à l'affectation des réflecteurs (12) auxdits intervalles de temps.

24. Procédé selon l'une des revendications 14 à 23,
**caractérisé en ce que** les processus de rétrodiffusion se produisant au niveau des différents réflecteurs (12) utilisent la même fréquence de modulation.

25. Procédé selon l'une des revendications 14 à 23,
**caractérisé en ce que** les processus de rétrodiffusion se produisant au niveau des différents réflecteurs (12) utilisent des fréquences de modulation différentes.
